# EUROPÄISCHE PATENTANMELDUNG

(11) **EP 2 028 078 A1**
(43) Veröffentlichungstag der Anmeldung: **25.02.2009**
(21) Anmeldenummer: 08168079.5
(22) Anmeldetag: 04.09.2003
(51) Int. Cl.: B62D 1/06, B62D 6/00

(54) **Lenkrad mit Freihanderkennung für Kraftfahrzeuge**

(30) Priorität: 06.09.2002 DE 10241414; 13.12.2002 DE 10258648; 10.01.2003 DE 10300874
(62) Teilanmeldung aus: 03773617.0
(71) Anmelder: Continental Teves AG & Co. oHG, 60488 Frankfurt am Main (DE)
(72) Erfinder: Rieth, Peter, 65343 Eltville (DE); Böhm, Jürgen, 65558 Oberneisen (DE); Linkenbach, Steffen, 65760 Eschborn (DE); Hoffmann, Oliver, 60486 Frankfurt am Main (DE); Nell, Joachim, 63452 Hanau (DE); Schirling, Andreas, 64319 Pfungstadt (DE); Netz, Achim, 62342 Seeheim-Jugenheim (DE); Stauder, Peter, 55128 Mainz (DE); Kuhn, Matthias, 63814 Mainaschaff (DE)

(57) **Zusammenfassung**

Bei einem Lenkrad für Kraftfahrzeuge sind piezoelektrische Mittel zur Erkennung eines Kontakts zwischen mindestens einer Hand des Fahrzeugführers und der Lenkhandhabe (Freihanderkennung) in Form eines druckresistiven Kabels (10) vorgesehen.

## Beschreibung

Die Erfindung betrifft ein Lenkhandhabe, insbesondere Lenkrad, für Kraftfahrzeuge.

Die Erfindung betrifft auch ein Verfahren zum Erfassen einer physikalischen Größe auf einer Lenkhandhabe.

Die Erfindung betrifft ebenso eine Steer-by-wire-Lenkung für ein Kraftfahrzeug.

Bei einer Lenkhandhabe, die mechanisch von dem Lenkaktuator entkoppelt ist und bei der die Übertragung eines Lenk-Signals an einen Lenkaktuator elektronisch erfolgt (Steer-by-wire-Lenkung), ist es notwendig zu erkennen, ob der Fahrer mindestens eine Hand an der Lenkhandhabe hat oder nicht bzw. ob der Fahrer die Lenkhandhabe auch festhält oder ob er nur mit einem Finger lenkt.

In bestimmten Fahrsituationen ist es beispielsweise notwendig, dass der Fahrer ein Gegenmoment an der Lenkhandhabe abstützt. Dann ist es erforderlich, zu erkennen, ob der Fahrer die Lenkhandhabe auch festhält.

Der Erfindung liegt die Aufgabe zugrunde, eine Lenkhandhabe, insbesondere Lenkrad, und eine Verfahren anzugeben, das für eine Steer-by-wire-Lenkung geeignet ist.

Diese Aufgabe wird nach der Erfindung durch die Merkmale der unabhängigen Patentansprüche gelöst. Durch die Merkmale der davon abhängigen Unteransprüche sind vorteilhafte Weiterbildungen angegeben.

Nach der Erfindung wird die Aufgabe dadurch gelöst, dass Mittel zur eines Kontakts zwischen mindestens einer Hand des Fahrzeugführers und der Lenkhandhabe (Freihanderkennung) vorgesehen sind. Unter dem Begriff "Freihanderkennung" ist demnach im folgenden eine Erkennung eines Kontakts oder einer Berührung zwischen mindestens einer Hand des Fahrzeugführers (Fahrers) und der Lenkhandhabe zu verstehen.

Die Mittel zur Freihanderkennung werden erfindungsgemäß so angeordnet, dass sie unter der äußeren Schicht (z.B. Lederummantelung) angebracht werden und somit für den Fahrer unsichtbar sind.

Erfindungsgemäß ist es vorgesehen, dass die Freihanderkennung mittels eines oder mehrerer in der Lenkhandhabe angeordneter, elektrisch leitender Metallkörper erfolgt.

Nach der Erfindung ist es vorgesehen, dass die Lenkhandhabe als eine kapazitive Freihanderkennung ausgebildet ist.

Es ist nach der Erfindung vorgesehen, dass die Lenkhandhabe mindestens eine unter einer Umhüllung angeordnete Elektrode aufweist, die mit einem Befestigungselement der Lenkhandhabe zusammenwirkt und so vorzugsweise einen Kondensator bildet.

Erfindungsgemäß ist es vorgesehen, dass bei der als kapazitiven Freihanderkennung ausgebildeten Lenkhandhabe die Dämpfung erfasst wird, die bei einer Einwirkung des Fahrers auf die Lenkhandhabe entsteht.

Nach der Erfindung ist es vorgesehen, dass die Freihanderkennung mittels eines oder mehrerer in der Lenkhandhabe angeordneter, druckresistiver piezoelektrischer Elemente erfolgt.

Es ist nach der Erfindung vorgesehen, dass die Freihanderkennung mittels eines oder mehrerer in der Lenkhandhabe an einem metallischen Band angebrachter Dehnungsmessstreifen erfolgt.

Erfindungsgemäß ist es vorgesehen, dass die piezoelektrischen Elemente paarweise um die Lenkhandhabe, vorzugsweise segmentweise, angeordnet sind.

Nach der Erfindung ist es vorgesehen, dass die Freihanderkennung mittels einer Bestimmung der Durchbiegung der Lenksäule erfolgt.

Es ist nach der Erfindung vorgesehen, dass die Freihanderkennung mittels einer oder mehrerer Wellen oder Schwingungen der Lenkhandhabe bzw. an der Lenkhandhabe erfolgt.

Erfindungsgemäß ist es vorgesehen, dass die Wellen optische Wellen sind.

Nach der Erfindung ist es vorgesehen, dass die Wellen Oberflächenwellen sind.

Es ist nach der Erfindung vorgesehen, dass die Dämpfung der Welle oder Wellen erfasst wird, die bei einer Einwirkung des Fahrers auf die Lenkhandhabe entsteht.

Erfindungsgemäß ist es vorgesehen, dass die Freihanderkennung mittels einer Ermittlung der elektrischen Leitfähigkeit der Oberfläche der Lenkhandhabe erfolgt.

Nach der Erfindung ist es vorgesehen, dass die Freihanderkennung mittels einer Temperaturmessung der Oberfläche der Lenkhandhabe erfolgt.

Nach der Erfindung ist es vorgesehen, dass die Lenkhandhabe eine Heizung aufweist und dass zumindest ein metallisches Bauteil der Heizung mit der Freihanderkennung zusammenwirkt.

Es ist nach der Erfindung vorgesehen, dass ein Heizfaden oder eine Heizfolie als Elektrode für eine kapazitive Freihanderkennung eingesetzt wird.

Erfindungsgemäß ist es vorgesehen, dass die Heizung mit einer Gleichspannung und die Freihanderkennung mit einer hochfrequenten Wechselspannung versorgt wird und dass die elektrische Verbindung der Heizung mit der Fahrzeugmasse galvanische getrennt wird.

Die Aufgabe wird auch durch ein Verfahren zum Erfassen einer physikalischen Größe auf einer Lenkhandhabe gelöst, das
dadurch gekennzeichnet ist, dass die Veränderung der physikalischen Größe, insbesondere deren Dämpfung, erfasst wird, die bei einer Einwirkung des Fahrers auf die Lenkhandhabe entsteht.

Vorteilhaft wird die Lenkhandhabe oder das Verfahren bei einer Steer-by-wire-Lenkung eingesetzt.

Die Erfindung wird in der nachfolgenden Beschreibung unter Bezugnahme auf die beiliegenden Abbildungen (Fig.1 bis Fig.6) näher erläutert.

Die Fig.1 zeigt schematisch eine Lenkhandhabe, insbesondere Lenkrad, bei der eine kapazitive Freihanderkennung erfolgt.

Die Fig.2 zeigt schematisch eine Lenkhandhabe, bei der eine piezoelektrische Freihanderkennung erfolgt.

Die Fig.3 zeigt schematisch eine Lenkhandhabe, bei der eine Freihanderkennung aufgrund einer Durchbiegung der Lenksäule erfolgt.

Die Fig.4 zeigt schematisch eine Lenkhandhabe, bei der eine Freihanderkennung nach Maßgabe von Oberflächenwellen an der Lenkhandhabe erfolgt.

Die Fig.5 zeigt schematisch ein Lenkhandhabe mit einer Heizeinrichtung, bei der eine kapazitive Freihanderkennung erfolgt.

Die Fig.6 zeigt schematisch ein Schaltbild für die eine Lenkhandhabe mit Heizeinrichtung und kapazitiver Freihanderkennung.

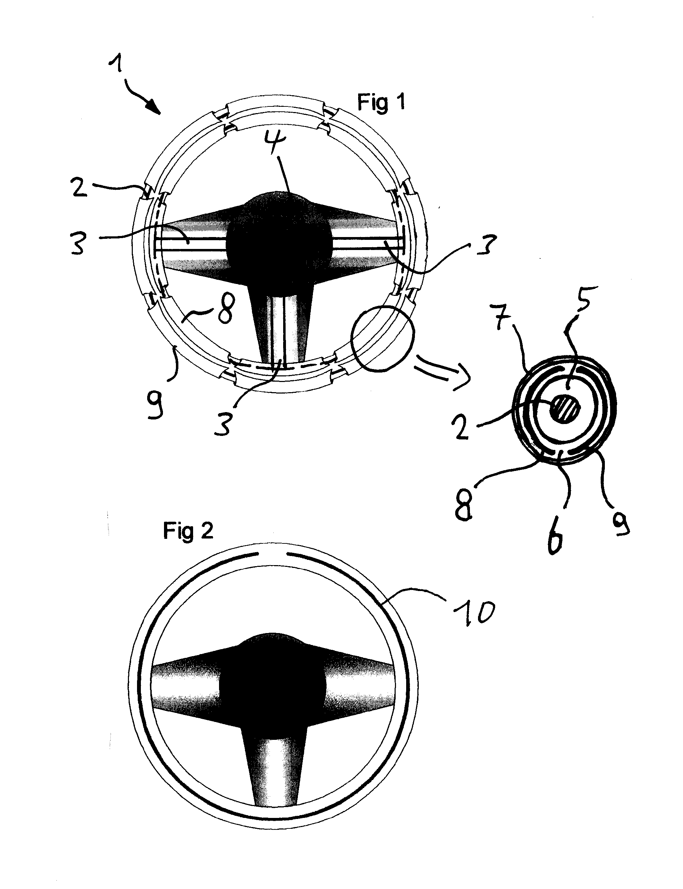

In der Fig.1 ist ein Lenkrad als Lenkhandhabe dargestellt, bei der eine Freihanderkennung auf kapazitivem Wege erfolgt.

Das Lenkrad 1 weist einen Kern 2 auf, in der Regel ein Metallring, der mit mehreren Streben 3 an der Lenksäule 4 verschraubt wird. Der Kern 2 wird mit einem Kunststoff 5 ummantelt. Darüber kommt im allgemeinen ein weitere Lage aus einem elastischen Material 6, wie dünner Schaumstoff, und/oder eine Ummantelung aus Leder 7.

Zur Erkennung einer Hand an dem Lenkrad ist um dem Metallring 2 des Lenkrads 1 ein weiterer Metallkörper angeordnet. Dieser kann entweder aus einer elektrisch leitenden Metallfolie oder aus einem elektrisch leitendem Metallgewebe bestehen. Der Metallkörper bildet zusammen mit dem Metallring 2 des Lenkrads eine Kapazität. Das Dieelektrikum bildet die Kunststoffummantelung 5 der Lenkhandhabe. Zur Isolierung dient die Lederummantelung 7 oder eine Kunststoffummantelung.

Das Lenkrad stellt so einen Kondensator dar. Dieser wird als kapazitiver Übertrager geschaltet. Der Fahrer ist durch den Kontakt mit Sitz, Boden und Pedalerie geerdet. Durch die Hand des Fahrers wird das Dielektrikum des Kondensators verändert. Hat der Fahrer die Hand am Lenkrad, dann dämpft er die Übertragung. Diese Dämpfung wird gemessen und bei Unterschreiten eines vorgegebenen Dämpfungs-Grenzwerts wird ein Signal dafür erzeugt, dass der Fahrer keinen Kontakt mit dem Lenkrad 1 hat.

Vorzugsweise sind rund um den Kern 2 der Lenkhandhabe 1 als Metallkörper Elektrodenpaare 8,9 in dem Schaumstoff angeordnet. Diese sind als Differenzialkondensatoren geschaltet. So werden Störungen und Temperatureinflüsse eliminiert. Durch die menschliche Hand wird das Dieelektrikum des Differenzialkondensators verändert, wodurch die Hand am Lenkrad erkannt wird.

Bei dem in Fig.2 dargestellten Lenkrad erfolgt eine Freihanderkennung eines Kontakts zwischen Fahrzeugführer und Lenkrad auf piezoelektrischem Wege.

Ein druckresistives Kabel (PZT Kabel) 10 wird in das Lenkrad eingelegt. Ein geringer Druck, der auf das Lenkrad ausgeübt wird, wird durch das Kabel 10 sensiert.

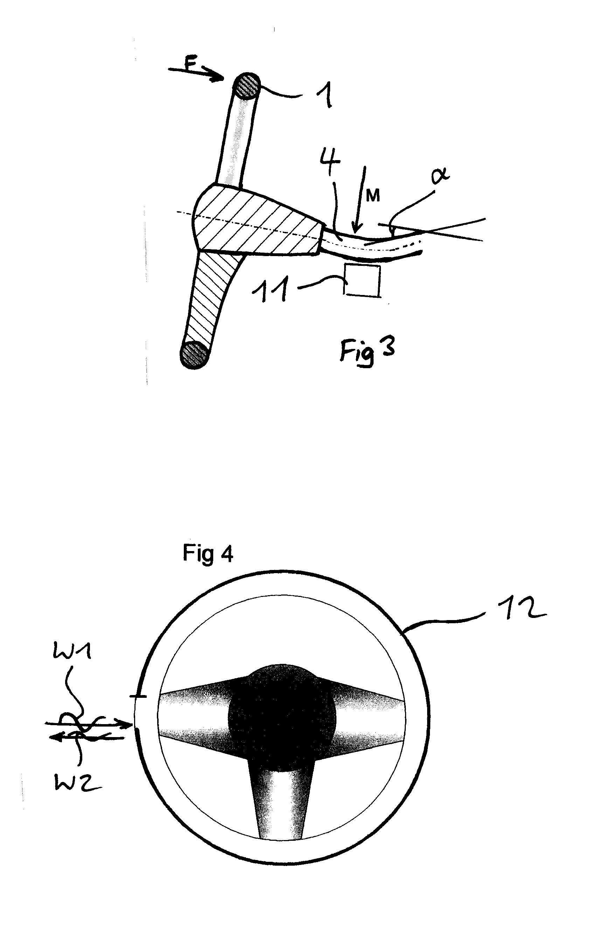

Bei der in Fig.3 gezeigten Ausführungsform wird ein Kontakt zwischen der Hand des Fahrzeugführers und dem Lenkrad aufgrund einer Durchbiegung der Lenksäule erkannt.

Liegen die Hände auf dem Lenkrad 1, üben sie eine Hebelkraft F auf die Lenksäule 4 aus. Mit einem Sensor 11, der die Durchbiegung, z.B. den Winkel α der Lenksäulenbiegung, misst, wird ein Signal erzeugt, wenn die Durchbiegung einen bestimmten Grenzwert unterschreitet. Dann gilt als erkannt, dass die Hände des Fahrer am Lenkrad nicht mehr anliegen.

Ferner ist eine optische Freihanderkennung vorgesehen. Dabei ist die äußere Hülle der Lenkhandhabe perforiert. Darunter befinden sich um den Umfang der Lenkhandhabe angeordnete Reflexlichtschranken. Das von ihnen ausgesendete Licht wird von der Hand reflektiert. In diesem Fall können diese Anteile des Lichts nicht in einen lichtempfindlichen Sensor gelangen, wodurch angezeigt wird, dass der Fahrer die Hände am Lenkrad hat.

Die Fig.4 zeigt schematisch ein Lenkrad, bei dem eine Freihanderkennung eines Kontakts zwischen der Hand des Fahrzeugführers nach Maßgabe von Oberflächenwellen der Lenkhandhabe erfolgt.

Am Umfang der Lenkhandhabe wird ein Ringsegment 12 aus einem harten Material angebracht. Am dessen Ende wird eine mechanische Welle W1 eingebracht, die am anderen Ende reflektiert wird. Die reflektierte Welle W2 wird gemessen. Ist die reflektierte Welle W2 stark geschwächt oder gar nicht mehr vorhanden, dann hat der Fahrer mindestens eine Hand am Lenkrad. Zusätzlich liegen aufgrund der Phasenverschiebung auch Informationen über die Funktion des Sensors vor. Ist die Phasenverschiebung konstant, liegt keine Störung vor.

Nach einem ähnlichen Prinzip ist es vorgesehen, dass eine Freihanderkennung mit Lichtwellen erfolgt. Ein nicht isoliertes Glasfaserkabel wird um das Lenkrad gelegt. Die Lichtwelle wird eingekoppelt und am Ende reflektiert. Durch eine Berührung der Fahrerhand wird die Amplitude geschwächt.

Die Freihanderkennung durch Lichtwellen und Oberflächenwellen funktioniert auch dann, wenn nicht die reflektierte Welle gemessen wird, sondern am Ende des Kabels oder Oberflächenwellenleiters eine Messung erfolgt.

Auch eine Freihanderkennung durch ein Lenkrad ist vorgesehen. Das Lenkrad wird dabei mit einem elektrisch leitenden Kunststoff bezogen, das in kurzen Abschnitten isolierende Trennstücke aufweist. Da die Fahrerhand eine bestimmte elektrische Leitfähigkeit aufweist, werden zwei oder mehrere Teile elektrisch überbrückt. Das weist darauf hin, dass der Fahrer zumindest eine Hand am Lenkrad hat.

Es ist vorgesehen, eine Freihanderkennung aufgrund einer Wärmemessung vorzunehmen. Die Lenkhandhabe weist dabei über den Umfang gleichmäßig verteilte Temperatursensoren auf. Erhitzt die Sonne im Sommer das Lenkrad, dann ist es dort, wo die Hände aufliegen, kälter. Bei niedrigen Fahrzeug-Innentemperaturen, z.B. im Winter, ist es wärmer an den Stellen, an denen die Hände aufliegen. Es wird so durch Messung einer Temperaturdifferenz bzw. eines Temperaturgefälles das Aufliegen der Fahrerhand erkannt.

Bei einer weiteren Ausgestaltung wird auf die Lenksäule mit einem Aktuator eine für den Fahrer nicht spürbare z.B. sinusförmige, Anregung gegeben. Durch die Hände am Lenkrad wird diese Anregung bedämpft. Diese Anregung kann mit einem empfindlichen Beschleunigungsmesser ausgelesen.

Die höchste Auflösung und die geringste Anfälligkeit gegen Umwelteinflüsse und Störungen und insgesamt die sicherste Freihanderkennung selbst behandschuhter Fahrerhände ist mit kapazitiver Messung oder durch Oberflächenwellen möglich. Daher sind diese Ausführungen besonders bevorzugt.

Für Lenkhandhaben ist zunehmend eine Heizung vorgesehen. Dann weist die Lenkhandhabe, insbesondere Lenkrad, ein Heizelement auf, das in der Regel aus einem Gewirke aus Metallfäden und dehnbaren Textilfäden besteht.

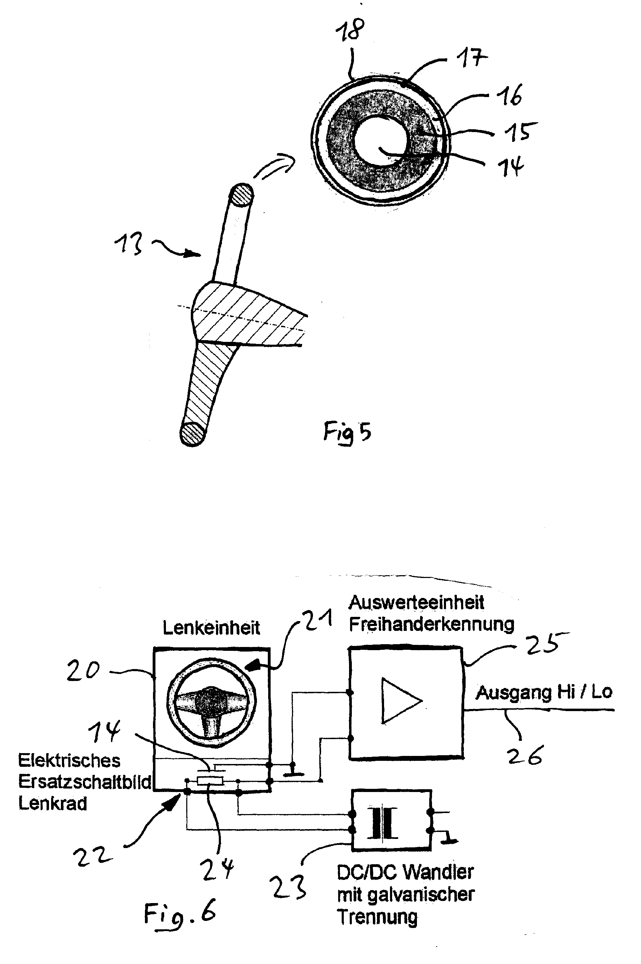

Ein derartiges Lenkrad 13 ist in Fig.5 dargestellt. Rund um den Kern 14 und einem umgebende Kunststoffumhüllung 15, z.B. aus Hartschaum, ist in einer Schaumstoffumhüllung 16 ein Heizungsgewebe 17 angeordnet. Darüber ist als äußere Umhüllung eine Ummantelung mit Leder 18 vorgesehen.

Bei dieser Ausführungsform wird erfindungsgemäß eine kapazitive Freihanderkennung realisiert, bei der das Gewirke 17 der Lenkradheizung für die Funktion der Freihanderkennung mit genutzt wird. Erfindungsgemäß bilden die Metallheizfäden 17 der Lenkhandhabe eine Elektrode und der Lenkradkern 14 bildet die Gegenelektrode.Dabei sind zwei Ausführungen vorgesehen:

Bei einer ersten Ausführung werden in das Gewirke 17 einige Fäden bzw. eine Folie zusätzlich eingebracht, die nicht zum Heizen benötigt werden. Das Gewirke wird dann in die Lenkhandhabe, insbesondere Lenkrad, eingearbeitet. Zum Heizen wird der eine Teil der Fäden benutzt, zur Freihanderkennung die zusätzlich eingebrachten Fäden oder die zusätzliche Folie.

Bei einer anderen Ausführungsform werden zur Heizung und zur Freihanderkennung die gleichen Metallfäden benutzt. Während die Heizung mit Gleichspannung versorgt wird, wird die Freihanderkennung mit hochfrequenten Wechselspannungspulsen realisiert. Dabei wird die Heizungsmasse von der Fahrzeugmasse galvanisch getrennt.

Die elektronische Schaltung ist in Fig.6 dargestellt. Die Lenkeinheit 20 weist ein Lenkrad 21 mit einer Heizung 22 auf. Die Heizung 22 wird mit einem Gleichspannungswandler (DC/DC-Wandler) 23 mit galvanischer Trennung mit Spannung versorgt. Die kapazitive Freihanderkennung erfolgt auf Grundlage einer Änderung der elektrischen Kapazität zwischen Fäden oder Folie der Heizung 24 sowie dem Metallkern 14 des Lenkrads 21. Diese Änderung werden von der Auswerteeinheit 25 erfasst und ausgewertet. Es wird ein Ausgangssignal erzeugt, das angibt, ob der Fahrer zumindest eine Hand am Lenkrad 21 hat oder nicht.

## Patentansprüche

1. Lenkhandhabe, insbesondere Lenkrad, für Kraftfahrzeuge, wobei Mittel zur Erkennung eines Kontakts zwischen mindestens einer Hand des Fahrzeugführers und der Lenkhandhabe (Freihanderkennung) vorgesehen sind und die Freihanderkennung mittels eines oder mehrerer in der Lenkhandhabe angeordneter, elektrisch leitender Metallkörper erfolgt.
**dadurch gekennzeichnet, dass** die Freihanderkennung mittels eines oder mehrerer in der Lenkhandhabe angeordneter, druckresistiver piezoelektrischer Elemente erfolgt.

2. Lenkhandhabe, insbesondere Lenkrad, für Kraftfahrzeuge nach Anspruch 1,
**dadurch gekennzeichnet, dass** die piezoelektrischen Elemente paarweise um die Lenkhandhabe, vorzugsweise segmentweise, angeordnet sind.

3. Lenkhandhabe, insbesondere Lenkrad, für Kraftfahrzeuge nach einem der vorangegangen Ansprüche 1,
**dadurch gekennzeichnet** als druckresistiver piezoelektrischer Elemente ein druckresistives Kabel (PZT Kabel) 10 in dem Lenkrad vorgesehen ist ein geringer Druck, der auf das Lenkrad ausgeübt wird, durch das Kabel 10 sensiert wird.
